# EUROPÄISCHE PATENTSCHRIFT

(11) **EP 0 895 062 B1**
(45) Veröffentlichungstag und Bekanntmachung des Hinweises auf die Patenterteilung: **28.01.2004**
(21) Anmeldenummer: 98105912.4
(22) Anmeldetag: 01.04.1998
(51) Int. Cl.: G01D 5/245, G01D 5/249

(54) **Optischer inkrementaler Geber**
Optical incremental encoder
Codeur optique incrémental

(30) Priorität: 31.07.1997 DE 19733048
(43) Veröffentlichungstag der Anmeldung: 03.02.1999
(73) Patentinhaber: ROBERT BOSCH GMBH, 70442 Stuttgart (DE)
(72) Erfinder: Rychlak, Stefan, 31241 Ilsede (DE)

(56) Entgegenhaltungen:
- EP-A- 0 630 097
- DE-A- 4 038 284
- DE-A- 4 436 724
- FR-A- 2 676 538
- US-A- 4 555 625

## Beschreibung

### Stand der Technik

Die Erfindung geht von einem optischen Inkrementgeber nach der Gattung des Hauptanspruchs aus.

Aus der noch nicht vorveröffentlichten deutschen Patentanmeldung mit dem Aktenzeichen 19717215.6 ist bereits ein optischer Inkrementgeber bekannt, der ein Inkrementrad mit Durchbrüchen, durch die das Licht einer Lichtquelle austritt, aufweist. Dabei sind zwei benachbarte Durchbrüche durch jeweils einen lichtundurchlässigen Steg voneinander beabstandet. Der optische Inkrementgeber umfaßt außerdem zwei Lichtempfänger, die in Abhängigkeit der Drehrichtung bei Betätigung des Inkrementrads phasenverschoben Signalimpulse abgeben. Den beiden Lichtempfängern ist jeweils über höchstens einen der Durchbrüche Licht zuführbar.

Aus der US 4,555,625 ist eine Codiervorrichtung zur Erfassung einer Drehbewegung bekannt, bei der in eine Trommel Durchbrüche eingebracht sind. Die Durchbrüche werden von Lichtquellen durchstrahlt, wobei jeweils für eine Reihe von Durchbrüchen ein Lichtdetektor zur Erfassung der Durchbrüche angebracht ist. Die Reihen der Durchbrüche sind versetzt gegeneinander angeordnet. In einem weiteren Ausführungsbeispiel weisen die Durchbrüche in verschiedenen Reihen auch verschiedene Größen auf.

Aus der DE 40 38 284 A 1 ist ein Verfahren und eine Vorrichtung zur Ermittlung der Position in Bewegungsrichtung eines rotatorisch bewegten Teils bekannt. Die Position des Teils soll unter Verwendung eines einzigen Sensors ermittelt werden. An einer codierten Scheibe sind hierzu einzelne Marken angeordnet, die Zwischenräume unterschiedlicher Länge einschließen. Bei einer Drehung werden die zwischen den Marken liegenden Zwischenräume erfasst und zur Ermittlung einer Drehrichtung ausgewertet. Die Position der Marken wird von einem Haltelement abgegriffen. Es wird ferner vorgeschlagen, anstelle eines Hallelementes ein beliebiges anderes optoelektronisches Abtastelement einzusetzen.

### Vorteile der Erfindung

Der erfindungsgemäße optische Inkrementgeber mit den Merkmalen des Hauptanspruchs hat demgegenüber den Vorteil, daß für die Detektion der Drehrichtung des Inkrementrades nur ein einziger Lichtempfänger erforderlich ist, so daß Platz und Kosten eingespart werden können.

Durch die in den Unteransprüchen aufgeführten Maßnahmen sind vorteilhafte Weiterbildungen und Verbesserungen des im Hauptanspruch angegebenen optischen Inkrementgebers möglich.

Vorteilhaft ist es, daß ein Drehknopf über ein Getriebe mit dem Inkrementrad verbunden ist und daß die Übersetzung des Getriebes so gewählt ist, daß der Lichtempfänger bei Betätigung des Drehknopfes eine Mindestanzahl von Durchbrüchen und Stegen detektiert. Auf diese Weise kann bereits bei einer geringen Drehung des Drehknopfes eine große Zahl von Durchbrüchen und Stegen detektiert werden, so daß eine fehlerfreie Erkennung der Drehrichtung und eine genaue Bestimmung der Anzahl der durchzuführenden Inkrementierungsschritte möglich ist. Außerdem kann durch Vorgabe einer möglichst großen Mindestanzahl eine hohe Auflösung der Drehbewegung des Drehknopfes erreicht werden, bei der auch der Einfluß verschiedener Geschwindigkeiten der Drehbewegung auf die Detektion unterschiedlich großer Durchbrüche und/oder Stege reduziert werden kann, da aufgrund der Vielzahl von detektierten Durchbrüchen und Stegen bezüglich der Drehrichtung redundante Informationen zur Fehlererkennung ausgewertet werden können.

Ein weiterer Vorteil besteht darin, daß sich die Durchbrüche und Stege in Bezug auf ihre Größe periodisch auf dem Inkrementrad abwechseln. Dadurch wird die Fehlererkennung weiter verbessert, in dem durch die Periodizität zusätzlich redundante Informationen bei einer Drehbewegung erzeugt werden können. Außerdem wird dadurch die Herstellung des Inkrementrades vereinfacht.

Ein weiterer Vorteil besteht darin, daß der Lichtempfänger in Abhängigkeit der Drehrichtung auf einer Periodenlänge eine unterschiedliche Folge von Durchbrüchen und Stegen in Bezug auf deren Größe detektiert. Auf diese Weise ist zur Bestimmung der Drehrichtung des Inkrementrades lediglich die Auswertung einer Periodenlänge erforderlich, so daß eine besonders schnelle Ermittlung der Drehrichtung möglich ist.

Ein weiterer Vorteil besteht darin, daß der Lichtempfänger bei einer Drehbewegung des Inkrementrades mindestens auf einer Periodenlänge Durchbrüche und Stege detektiert. Auf diese Weise wird eine Erkennung der Drehrichtung des Inkrementrades sichergestellt.

Gleichzeitig ist es vorteilhaft, daß als Muster jeweils eine Periode von Durchbrüchen und Stegen für die beiden Drehrichtungen vorgegeben ist. Dadurch wird der Aufwand an Speicherplatz für die beiden Muster auf ein Minimum beschränkt.

### Zeichnung

Ein Ausführungsbeispiel der Erfindung ist in der Zeichnung dargestellt und in der nachfolgenden Beschreibung näher erläutert. Es zeigen Figur 1 ein Inkrementrad, Figur 2 einen Querschnitt eines optischen Inkrementgebers, Figur 3 ein Blockschaltbild eines optischen Inkrementgebers, Figur 4 einen Ablaufplan für eine Auswerteeinheit des optischen Inkrementgebers und Figur 5 ein Beispiel für eine detektierte Folge von Durchbrüchen und Stegen sowie von vorgegebenen Mustern.

### Beschreibung des Ausführungsbeispiels

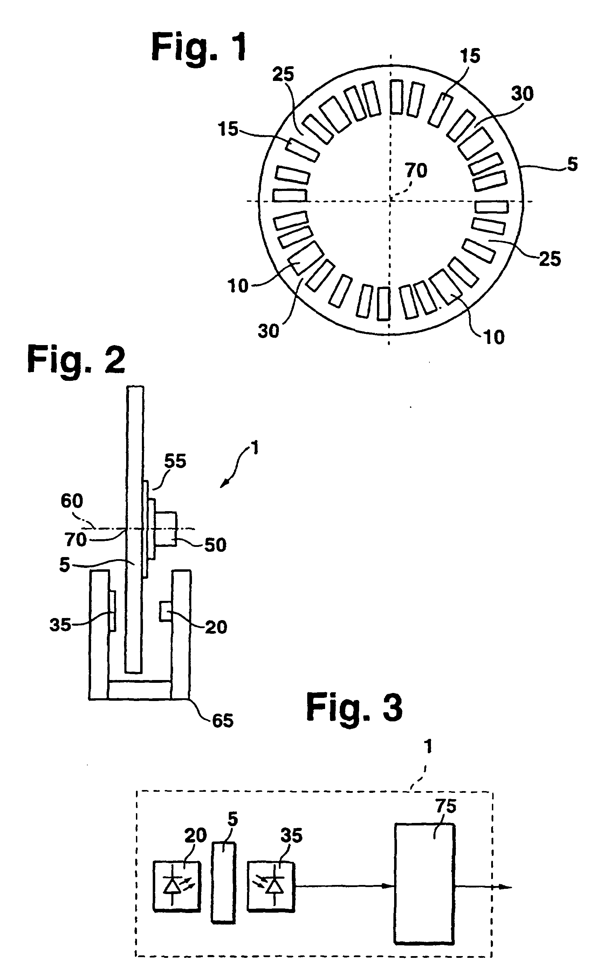

In Figur 2 kennzeichnet 1 einen optischen Inkrementgeber, wie er beispielsweise an einem Autoradio zur Einstellung der Lautstärke vorgesehen sein kann. Der in Figur 2 in einem Querschnitt dargestellte optische Inkrementgeber 1 umfaßt ein Inkrementrad 5, das um eine Achse 60 drehbeweglich gelagert ist. Über ein Getriebe 55 ist das Inkrementrad 5 mit einem Drehknopf 50 verbunden, der dem Benutzer die Einstellung einer Bedienfunktion oder eines Funktionswertes einer Bedienfunktion an einem elektrischen Gerät, beispielsweise der Lautstärke des Autoradios ermöglicht. Das Inkrementrad 5 ist gemäß Figur 1 scheibenförmig ausgebildet und umfaßt einen zu einem Mittelpunkt 70 konzentrischen Ring von aufeinanderfolgenden Durchbrüchen 10, 15 und Stegen 25, 30, durch die die Durchbrüche 10, 15 voneinander beabstandet sind. Die Stege 25, 30 sind aus lichtundurchlässigem Material gebildet. Die Durchbrüche 10, 15 liegen in zwei verschiedenen Größen vor. Die größeren Durchbrüche sind in Figur 1 mit dem Bezugszeichen 10 und die kleineren Durchbrüche mit dem Bezugszeichen 15 gekennzeichnet. Entsprechend liegen auch die Stege 25, 30 in zwei verschiedenen Größen vor. Die größeren Stege sind mit dem Bezugszeichen 25 gekennzeichnet, die kleineren Stege mit dem Bezugszeichen 30. Im Ausführungsbeispiel gemäß Figur 1 sind die Durchbrüche 10, 15 und die Stege 25, 30 periodisch angeordnet, wobei sich eine Periodenlänge über einen Viertelkreis erstreckt, so daß insgesamt 4 Periodenlängen in Figur 1 dargestellt sind. Das Inkrementrad 5 ist durch eine Lichtschranke 65 geführt, die eine beispielsweise als Leuchtdiode ausgebildete Lichtquelle 20 und einen beispielsweise als Fotodiode ausgebildeten Lichtempfänger 35 umfaßt. Die Lichtquelle 20 und der Lichtempfänger 35 können dabei beispielsweise im Infrarot-Wellenlängenbereich arbeiten. Die Lichtquelle 20 und der Lichtempfänger 35 sind in Höhe der Durchbrüche 10, 15 und der Stege 25, 30 angeordnet, so daß dem Lichtempfänger 35 nur über die Durchbrüche 10, 15 Licht von der gegenüberliegenden Lichtquelle 20 zugeführt werden kann. Dabei detektiert der Lichtempfänger 35 ein Helligkeitsmaximum für den Fall, daß zwischen der Lichtquelle 20 und dem Lichtempfänger 35 ein Durchbruch 10, 15 liegt, und ein Helligkeitsminimum für den Fall, daß zwischen der Lichtquelle 20 und dem Lichtempfänger 35 ein Steg 25, 30 liegt. Gemäß Figur 1 sind die großen Durchbrüche 10 doppelt so breit wie die kleinen Durchbrüche 15 und die großen Stege 25 doppelt so breit wie die kleinen Stege 30. Auf diese Weise wird bei konstanter Drehgeschwindigkeit des Inkrementrades 5 ein großer Durchbruch 10 doppelt so lang vom Lichtempfänger 35 detektiert wie ein kleiner Durchbruch 15 und ein großer Steg 25 doppelt so lang wie ein kleiner Steg 30. Bei einer Drehung des Inkrementrades 5 werden dabei von der Lichtschranke 65 nacheinander abwechselnd die Durchbrüche 10, 15 und die Stege 25, 30 abgetastet. Dazu ist der Ring mit den Durchbrüchen 10, 15 und den Stegen 25, 30 des Inkrementrades 5 bei Drehung des Inkrementrades 5 um die Achse 60 genau zwischen der Lichtquelle 20 und dem Lichtempfänger 35 geführt.

In Figur 3 ist ein Blockschaltbild des optischen Inkrementgebers 1 dargestellt. Dabei wird das von der Lichtquelle 20 abgestrahlte Licht über die Durchbrüche 10, 15 des Inkrementrades 5 dem Lichtempfänger 35 zugeführt und dort detektiert. Ein vom Lichtempfänger 35 erzeugtes, der detektierten Helligkeit in seiner Amplitude proportionales Signal wird einer Auswerteeinheit 75 zugeführt, die die Drehrichtung und den Drehwinkel einer Drehbewegung des Inkrementrades 5 ermittelt und eine entsprechende Einstellung einer Funktion oder eines Funktionswertes veranlaßt. Das der Auswerteeinheit 75 vom Lichtempfänger 35 zugeführte Signal ist dabei aufgrund einer Schwellwertoperation digitalisiert, so daß der Helligkeitsverlauf in eine Bitfolge 80 von Nullen und Einsen umgewandelt wird. Die Detektion eines großen Durchbruchs 10 führt zu zwei aufeinanderfolgenden Einsen in der Bitfolge 80. Die Detektion eines großen Steges 25 führt in der Bitfolge 80 zu zwei aufeinanderfolgenden Nullen. Die Detektion eines kleinen Durchbruchs 15 führt in der Bitfolge 80 zu einer Eins und die Detektion eines kleinen Steges 30 führt in der Bitfolge 80 zu einer Null. Die vom Lichtempfänger 35 aufgrund des detektierten Helligkeitsverlaufs erzeugte und der Auswerteeinheit 75 zugeführte Bitfolge 80 wird in der Auswerteeinheit 75 mit beispielsweise dort abgespeicherten Mustern 40, 45 zur Ermittlung der Drehrichtung des Inkrementrades 5 verglichen. Die Muster 40, 45 können jedoch auch in einem der Auswerteeinheit 75 zugeordneten Speicher abgelegt sein. Dabei dient ein erstes Muster 40 zur Identifizierung der Drehrichtung des Inkrementrades gemäß Figur 1 entgegen dem Uhrzeigersinn und ein zweites Muster 45 zur Identifizierung einer Drehbewegung des Inkrementrades 5 im Uhrzeigersinn. Für die beiden Muster 40, 45 genügt dabei das Abspeichern jeweils einer Periodenlänge einer Folge von Durchbrüchen 10, 15 und Stegen 25, 30.

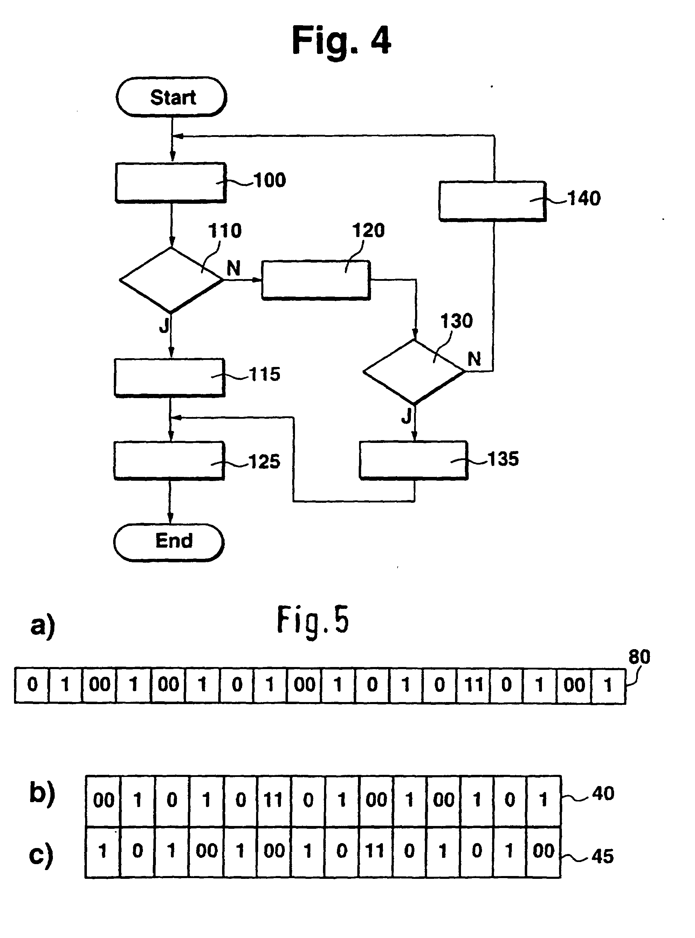

In Figur 5a) ist ein Beispiel einer der Auswerteeinheit 75 zugeführten Bitfolge 80 dargestellt. In Figur 5b) ist ein Beispiel für ein erstes Muster 40 und in Figur 5c) ein Beispiel für ein zweites Muster 45 dargestellt.

In Figur 4 ist ein Ablaufplan für die Funktionsweise der Auswerteeinheit 75 dargestellt. Bei einem Programmpunkt 100 wird dabei das erste Muster 40 über die vom Lichtempfänger 35 der Auswerteeinheit 75 zugeführte Bitfolge 80 geschoben. Bei Programmpunkt 110 wird geprüft, ob das erste Muster 40 mit einem Teil der Bitfolge 80 übereinstimmt. Ist dies der Fall, so wird zum Programmpunkt 115 verzweigt, anderenfalls wird zu Programmpunkt 120 verzweigt. Bei Programmpunkt 115 wird eine Drehbewegung des Inkrementrades 5 entgegen dem Uhrzeigersinn detektiert. Bei Programmpunkt 120 wird das zweite Muster 45 über die Bitfolge 80 geschoben. Bei Programmpunkt 130 wird geprüft, ob das zweite Muster 45 mit einem Teil der Bitfolge 80 übereinstimmt. Ist dies der Fall, so wird zum Programmpunkt 135 verzweigt, anderenfalls wird zu Programmpunkt 140 verzweigt. Bei Programmpunkt 135 wird eine Drehbewegung des Inkrementrades 5 im Uhrzeigersinn detektiert. Vom Programmpunkt 115 und vom Programmpunkt 135 wird zu Programmpunkt 125 verzweigt. Bei Programmpunkt 125 wird in der Bitfolge 80 die Zahl der Null-/Eins-Übergänge als Maß für den Drehwinkel der Drehbewegung des Inkrementrades 5 ermittelt und eine entsprechende Inkrementierung bzw. Dekrementierung der zugehörigen Bedienfunktion beziehungsweise des zugehörigen Bedienfunktionswertes veranlaßt. Bei Programmpunkt 140 wird auf das Eintreffen einer neuen Bitfolge 80 gewartet. Anschließend wird zu Programmpunkt 100 zurückverzweigt.

Für den Fall, daß die Bitfolge 80 mit keinem der Muster 40, 45 übereinstimmt, wird also kein Inkrementier- beziehungsweise Dekrementiervorgang von der Auswerteeinheit 75 eingeleitet, so daß eine neue Bitfolge 80 für eine Auswertung der Drehrichtung und damit ein erneuter Drehvorgang des Inkrementrades 5 erforderlich ist. Es kann jedoch auch zusätzlich die Drehgeschwindigkeit des Inkrementrades 5 ausgewertet werden, so daß bei verschiedenen Drehgeschwindigkeiten während eines einzigen Drehvorgangs des Inkrementrades 5 entstehende Fehler in der Bitfolge 80 erkannt werden können. Zur Detektierung der Drehrichtung des Inkrementrades 5 ist es erforderlich, daß die Bitfolge 80 mindestens eine Periodenlänge aufweist, damit sie mit den beiden Mustern 40, 45 verglichen werden kann. Dies wird durch eine entsprechend gewählte Übersetzung des Getriebes 55 gewährleistet, so daß bereits eine minimale Drehbewegung des Drehknopfes 50 zur Abtastung mindestens einer Periodenlänge von aufeinanderfolgenden Duchbrüchen 10, 15 und Stegen 25, 30 durch die Lichtschranke 65 führt. Auf diese Weise ist die Bitfolge 80 in jedem Fall genügend lang, um mit den beiden Mustern 40, 45 verglichen werden zu können. Für den Vergleich der Bitfolge 80 mit den beiden Mustern 40, 45 wird aus der Bitfolge 80 an beliebiger Stelle eine Periodenlänge entnommen und zyklisch mit dem entsprechenden Muster 40, 45 verglichen. Ergibt sich für keines der beiden Muster 40, 45 eine Übereinstimmung mit der Bitfolge 80, so kann bei genügend großer Bitfolge 80 auch ein anderer Teil für den Vergleich mit dem entsprechenden Muster 40, 45 entnommen werden, so daß bei einer falschen Detektion der Breite eines Durchbruchs 10, 15 beziehungsweise eines Steges 25, 30, verursacht durch Variation der Drehgeschwindigkeit des Inkrementrades 5, dennoch eine Möglichkeit zur Erkennung der Drehrichtung gegeben ist, sofern sich der Bitfolge 80 eine fehlerfreie Periodenlänge entnehmen läßt.

Im Ausführungsbeispiel gemäß Figur 5a) ist die Bitfolge 80 folgendermaßen aufgebaut:
0-1-00-1-00-1-0-1-00-1-0-1-0-11-0-1-00-1.

Gemäß Figur 5b) ist das erste Muster 40 auf der Grundlage einer Periodenlänge gemäß Figur 1 folgendermaßen aufgebaut:
00-1-0-1-0-11-0-1-00-1-00-1-0-1.

Gemäß Figur 5c) ist das zweite Muster 45 für eine Drehbewegung des Inkrementrades 5 in entgegengesetzter Richtung im Vergleich zum ersten Muster 40 gemäß Figur 5b) in umgekehrter Reihenfolge aufgebaut:
1-0-1-00-1-00-1-0-11-0-1-0-1-00.

Bei diesem Beispiel wird bei Programmschritt 110 gemäß Figur 4 eine Übereinstimmung zwischen dem ersten Muster 40 und einem Teil der Bitfolge 80 festgestellt, so daß eine Drehbewegung des Inkrementrades 5 in entgegengesetzter Richtung zum Uhrzeigersinn ermittelt wird.

Es ist nicht erforderlich, daß sowohl die Durchbrüche 10, 15 als auch die Stege 25, 30 jeweils in verschiedenen Größen vorliegen. Es reicht auch bereits aus, wenn entweder für die Durchbrüche 10, 15 oder für die Stege 25, 30 zwei verschiedene Größen vorgesehen sind. Es ist jedoch auch möglich, mehr als zwei verschiedene Größen für die Durchbrüche 10, 15 beziehungsweise die Stege 25, 30 vorzusehen.

Die Periodenlänge sollte so gewählt werden, daß sich in Abhängigkeit der Drehrichtung eine unterschiedliche Folge von Durchbrüchen und Stegen in Bezug auf deren Größe ergibt, wobei die jeweilige Folge für die ihr zugeordnete Drehrichtung charakteristisch sein muß, das heißt, nur bei der entsprechenden Drehrichtung detektierbar sein darf. Als maximale Periodenlänge ist die gesamte, auf dem Inkrementrad 5 aufgebrachte Folge von Durchbrüchen 10, 15 und Stegen 25, 30 verwendbar. Weiterhin kann die Übersetzung des Getriebes 55 auch so gewählt sein, daß die bei Betätigung des Drehknopfes 50 durch den Lichtempfänger 35 detektierte Mindestanzahl von Durchbrüchen 10, 15 und Stegen 25, 30 größer als eine Periodenlänge ist, so daß Fehler bei der Detektion von Durchbrüchen 10, 15 und Stegen 25, 30 durch redundante Information gegebenenfalls kompensiert werden können.

Anstelle des Infrarot-Wellenlängenbereichs kann für die Lichtquelle 20 und den Lichtempfänger 35 auch ein anderer Wellenlängenbereich, beispielsweise auch des sichtbaren Lichts, verwendet werden.

Der erfindungsgemäße optische Inkrementgeber 1 ist nicht auf die Einstellung von Bedienfunktionen und Funktionswerten bei Autoradios beschränkt, sondern allgemein auf alle elektrischen Geräte mit einstellbaren Bedienfunktionen und Funktionswerten anwendbar.

## Patentansprüche

1. Optischer Inkrementgeber (1) mit einem Inkrementrad (5), das Durchbrüche (10, 15) aufweist, durch die das Licht einer Lichtquelle (20) austritt, wobei zwischen zwei Durchbrüchen (10, 15) jeweils ein lichtundurchlässiger Steg (25, 30) angeordnet ist, **dadurch gekennzeichnet, daß** genau ein Lichtempfänger (35) vorgesehen ist, für den das Licht der Lichtquelle (20) über die Durchbrüche (10, 15) empfangbar ist, daß mindestens zwei verschiedene Größen für die Durchbrüche (10, 15) und für die Stege (25, 30) vorgesehen sind, daß der Lichtempfänger (35) in Abhängigkeit der Drehrichtung des Inkrementrades (5) eine unterschiedliche Folge von Durchbrüchen (10, 15) und Stegen (25, 30) in Bezug auf deren Größe detektiert und daß eine Auswerteeinheit (75) durch einen Vergleich der detektierten Folge von Durchbrüchen (10, 15) und Stegen (25, 30) mit vorgegebenen Mustern (40, 45) die Drehrichtung des Inkrementrades (5) ermittelt.

2. Optischer Inkrementgeber (1) nach Anspruch 1, **dadurch gekennzeichnet, daß** ein Drehknopf (50) über ein Getriebe (55) mit dem Inkrementrad (5) verbunden ist und daß die Übersetzung des Getriebes (55) so gewählt ist, daß der Lichtempfänger (35) bei Betätigung des Drehknopfes (50) eine Mindestanzahl von Durchbrüchen (10, 15) und Stegen (25, 30) detektiert, die eine Erkennung der Drehrichtung des Inkrementrades (5) durch die Auswerteeinheit (75) erlaubt.

3. Optischer Inkrementgeber (1) nach Anspruch 1 oder 2, **dadurch gekennzeichnet, daß** sich die Durchbrüche (10, 15) und Stege (25, 30) in Bezug auf ihre Größe periodisch auf dem Inkrementrad (5) abwechseln.

4. Optischer Inkrementgeber (1) nach Anspruch 3, **dadurch gekennzeichnet, daß** der Lichtempfänger (35) in Abhängigkeit der Drehrichtung auf einer Periodenlänge eine unterschiedliche Folge von Durchbrüchen (10, 15) und Stegen (25, 30) in Bezug auf deren Größe detektiert.

5. Optischer Inkrementgeber (1) nach Anspruch 3 oder 4, **dadurch gekennzeichnet, daß** der Lichtempfänger (35) bei einer Drehbewegung des Inkrementrades (5) mindestens auf einer Periodenlänge Durchbrüche (10, 15) und Stege (25, 30) detektiert.

6. Optischer Inkrementgeber (1) nach einem der Ansprüche 3, 4 oder 5, **dadurch gekennzeichnet, daß** als Muster (40, 45) jeweils eine Periode von Durchbrüchen (10, 15) und Stegen (25, 30) für die beiden Drehrichtungen vorgegeben ist.

7. Optischer Inkrementgeber (1) nach einem der vorherigen Ansprüche, **dadurch gekennzeichnet, daß** die Auswerteeinheit (75) den bei Betätigung des Inkrementrades (5) auftretende Drehwinkel aus der Anzahl der detektierten Durchbrüche (10, 15) und Stege (25, 30) detektiert.

8. Optischer Inkrementgeber (1) nach einem der vorherigen Ansprüche, **dadurch gekennzeichnet, daß** die Lichtquelle (20) als Infrarot-Leuchtdiode und der Lichtempfänger (35) als Infrarot-Fotodiode ausgebildet sind.

## Claims

1. Optical incremental sensor (1) having an increment wheel (5) which has cutouts (10, 15) through which the light of a light source (20) exits, an opaque web (25, 30) being arranged in each case between two cutouts (10, 15), **characterized in that** exactly one optoreceiver (35) is provided for which the light of the light source (20) can be received via the cutouts (10, 15), **in that** two different sizes are provided for the cutouts (10, 15) and for the webs (25, 30), **in that** the optoreceiver (35) detects a different sequence of cutouts (10, 15) and webs (25, 30) with reference to their size as a function of the direction of rotation of the increment wheel (5), and **in that** an evaluation unit (75) determines the direction of rotation of the increment wheel (5) by comparing the detected sequence of cutouts (10, 15) and webs (25, 30) with prescribed patterns (40, 45).

2. Optical incremental sensor (1) according to Claim 1, **characterized in that** a rotary knob (50) is connected to the increment wheel (5) via a gear (55), and **in that** the transmission ratio of the gear (55) is selected such that upon actuation of the rotary knob (50) the optoreceiver (35) detects a minimum number of cutouts (10, 15) and webs (25, 30) which permits the direction of rotation of the increment wheel (5) to be detected by the evaluation unit (75).

3. Optical incremental sensor (1) according to Claim 1 or 2, **characterized in that** the cutouts (10, 15) and webs (25, 30) alternate periodically on the increment wheel (5) with reference to their size.

4. Optical incremental sensor (1) according to Claim 3, **characterized in that** the optoreceiver (35) detects a different sequence of cutouts (10, 15) and webs (25, 30) with reference to their size on a period length as a function of the direction of rotation.

5. Optical incremental sensor (1) according to Claim 3 or 4, **characterized in that** in the event of a rotary movement of the increment wheel (5) the optoreceiver (35) detects cutouts (10, 15) and webs (25, 30) at least on one period length.

6. Optical incremental sensor (1) according to one of Claims 3, 4 or 5, **characterized in that** in each case a period of cutouts (10, 15) and webs (25, 30) is provided as a pattern (40, 45) for the two directions of rotation.

7. Optical incremental sensor (1) according to one of the preceding claims, **characterized in that** the evaluation unit (75) detects the angle of rotation occurring upon actuation of the increment wheel (5) from the number of the detected cutouts (10, 15) and webs (25, 30).

8. Optical incremental sensor (1) according to one of the preceding claims, **characterized in that** the light source (20) is designed as an infrared light-emitting diode, and the optoreceiver (35) is designed as an infrared photodiode.

## Revendications

1. Codeur optique incrémental (1) comportant une roue incrémentale (5) munie des découpes (10, 15) traversées par la lumière d'une source lumineuse (20), et
une branche opaque (25, 30) existe entre chaque fois deux découpes (10, 15),
**caractérisé en ce qu'**
il est prévu précisément un photorécepteur (35) pour recevoir la lumière de la source lumineuse (20) à travers les découpes (10, 15),
au moins deux dimensions différentes des découpes (10, 15) et des branches (25, 30),
le photorécepteur (35) détecte une suite de dimensions de découpes (10, 15) et de branches (25, 30) différentes en fonction du sens de rotation de la roue incrémentale (5), et
une unité d'exploitation (75) compare la suite détectée de découpes (10, 15) et de branches (25, 30) à des modèles prédéterminés (40, 45) pour obtenir la vitesse de rotation de la roue incrémentale (5).

2. Codeur optique incrémental (1) selon la revendication 1,
**caractérisé en ce qu'**
un bouton tournant (50) est relié à la roue incrémentale (5) par l'intermédiaire d'une transmission (55), et
la démultiplication de la transmission (55) est choisie pour que le photorécepteur (35) détecte un nombre minimum de découpes (10, 15) et de branches (25, 30) lors de l'actionnement du bouton tournant (50), nombre permettant à l'unité d'exploitation (75) de reconnaître le sens de rotation de la roue incrémentale (5).

3. Codeur optique incrémental (1) selon l'une quelconque des revendications 1 ou 2,
**caractérisé en ce que**
les découpes (10, 15) et les branches (25, 30) alternent périodiquement de dimensions sur la roue incrémentale (5).

4. Codeur optique incrémental (1) selon la revendication 3,
**caractérisé en ce que**
le photorécepteur (35) détecte en fonction du sens de rotation, et sur une longueur de périodes, une suite de dimensions différentes de découpes (10, 15) et de branches (25, 30).

5. Codeur optique incrémental (1) selon l'une quelconque des revendications 3 ou 4,
**caractérisé en ce que**
le photorécepteur (35) détecte les découpes (10, 15) et les branches (25, 30) sur au moins une longueur de périodes pour un mouvement de rotation de la roue incrémentale (5).

6. Codeur optique incrémental (1) selon l'une quelconque des revendications 3, 4 ou 5,
**caractérisé en ce que**
le modèle (40, 45) est prédéfini chaque fois sous la forme d'une période de découpes (10, 15) et de branches (25, 30) pour les deux sens de rotation.

7. Codeur optique incrémental (1) selon l'une quelconque des revendications précédentes,
**caractérisé en ce que**
l'unité d'exploitation (75) détecte l'angle de rotation produit par l'actionnement de la roue incrémentale (5) à partir du nombre de découpes (10, 15) et de branches (25, 30) détecté.

8. Codeur optique incrémental (1) selon l'une quelconque des revendications précédentes,
**caractérisé en ce que**
la source lumineuse (20) est une diode électroluminescente travaillant dans l'infrarouge et le photorécepteur (35) une photodiode travaillant dans l'infrarouge.
